# NOUVEAU FASCICULE DE BREVET EUROPEEN

(11) **EP 2 504 667 B2**
(45) Date de publication et mention de la décision concernant l'opposition: **11.09.2019**
(45) Mention de la délivrance du brevet: 10.08.2016
(21) Numéro de dépôt: 10787514.8
(22) Date de dépôt: 10.11.2010
(51) Int. Cl.: G01D 11/30

(54) **DISPOSITIF DE MESURE DE GRANDEURS PARIETALES**
MESSVORRICHTUNG ZUR ANWENDUNG AN EINER WANDUNG
MEASUREMENT DEVICE FOR USE ON WALLS

(30) Priorité: 27.11.2009 FR 0905715
(43) Date de publication de la demande: 03.10.2012
(73) Titulaire: MC ACI, 13090 Aix-en-Provence (FR)
(72) Inventeur: LAURENT, Ivan, F-13090 Aix-en-Provence (FR)
(74) Mandataire: Marchand, André
(86) Numéro de dépôt international: PCT/FR2010/000751
(87) Numéro de publication internationale: WO 2011/064465

(56) Documents cités:
- EP-A1- 1 028 463
- FR-A1- 2 517 156
- FR-A1- 2 749 656
- FR-A1- 2 749 656
- FR-A1- 2 860 293
- US-A- 6 134 485
- US-A1- 2004 150 499
- US-A1- 2009 186 264
- US-B1- 7 612 997
- US-B2- 7 171 849
- Vincent Nguyen: "WildCharge adapter for iPhone and iPod touch review", Internet Archive Wayback Machine , 30 April 2008 (2008-04-30), pages 1-13, XP055382001, Retrieved from the Internet: URL:https://web.archive.org/web/2008043002 1202/http://www.iphonebuzz.com:80/wildchar ge-adapter-for-iphone-and-ipod-touch-revie w-242399.php [retrieved on 2017-06-15]
- iphonebuzz: "WILDCHARGE Wildcharger pad, iPhone and iPod touch cases", You Tube , 23 April 2008 (2008-04-23), page 1, XP054977447, Retrieved from the Internet: URL:https://www.youtube.com/watch?v=o3p8Ki Zu_O8 [retrieved on 2017-06-19]
- Graz Ingrid et al: "Flexible ferroelectret field-effect transistor for large-area sensor skins and microphones", Applied Physics Letters, vol. 89, no. 7, 14 August 2006 (2006-08-14), pages 073501-073501-3, DOI: 10.1063/1.2335838
- Libor Rufer: "On the use of PVDF sensors for the measurement of pressure fluctuations on fan blades", Conference Proceedings Article, 13ème Colloque d'Aéro et Hydroacoustique, 9 June 1993 (1993-06-09), pages 21-25,

## Description

La présente invention concerne un procédé de fabrication d'un dispositif de mesure de grandeurs pariétales, destiné à être agencé sur une surface ou une paroi pour conduire des mesures de grandeurs physiques comme des mesures de pression, de vibration, de température, de contrainte, d'accélération, d'humidité, au voisinage de la surface ou de la paroi.

Des dispositifs du type précité sont bien connus dans le domaine de l'étude des structures aérodynamiques et notamment dans le domaine de l'aéronautique. Ils comportent généralement un support de faible épaisseur recevant des capteurs et des moyens de connexion des capteurs à un système de collecte et de traitement de données.

En particulier, la demande FR 2 749 656 décrit un "dispositif de faible épaisseur instrumenté formant peau" comprenant une plaque support rigide ou semi-rigide, en métal ou époxy, de faible épaisseur, présentant une face intérieure équipée de capteurs et de faisceaux de liaison électrique. La plaque support est montée sur une surface d'accueil, par exemple une peau d'aéronef, par l'intermédiaire d'entretoises en mousse adhésive agencées parallèlement aux filets d'air. La face intérieure de la plaque support est agencée en regard de la surface d'accueil de manière que les capteurs soient logés dans un espace de faible hauteur s'étendant entre la plaque support et la surface d'accueil. Des trous sont pratiqués dans la plaque support afin de permettre des mesures de pression.

Un tel dispositif s'avère peu pratique à l'emploi en raison de la rigidité que doit présenter la plaque support, qui ne doit pas se déformer sous l'effet de la pression extérieure. Cette rigidité implique un préformage de la plaque support afin que sa forme soit adaptée à celle de la surface d'accueil, ce qui accroît considérablement son prix de revient. Par ailleurs, ce dispositif découple mécaniquement les capteurs relativement à la surface d'accueil et ne permet pas la mesure de vibrations apparaissant sur celle-ci.

La demande FR 2 860 293 propose une solution alternative sous la forme d'un disque support en matériau souple, apte à s'adapter à des formes diverses de peau d'aéronef, au centre duquel est pratiqué un trou équipé d'un insert métallique permettant d'agencer un capteur sur le disque support. Une gorge radiale permet de faire passer des fils électriques sous le disque support afin de connecter le capteur à un circuit de mesure.

Un tel dispositif est prévu pour ne recevoir qu'un seul capteur et offre un moyen de connexion électrique du capteur relativement rudimentaire. Ainsi, l'agencement d'une pluralité de tels dispositifs sur une surface d'accueil pose un problème délicat de rassemblement et de fixation des fils électriques issus de chaque dispositif. Par ailleurs, et à l'instar du dispositif précédent, le support en forme de disque découple mécaniquement le capteur de la surface d'accueil et ne permet pas de mesurer des vibrations pariétales.

Enfin, le brevet US 6 134 485 et la demande US 2006/0202086 décrivent une "ceinture de capteurs" destinée à être agencée sur les ailes d'un avion. Une telle ceinture de capteurs comprend une bande support en un matériau souple sur laquelle divers capteurs sont connectés à un bus électrique commun. Chaque capteur comprend un substrat d'oxyde de silicium (SiO2) prisonnier du matériau qui forme la ceinture, un capteur microélectromécanique (MEMS) agencé sur le substrat, et des circuits intégrés montés en "puce retournée" ("flip chip") sur le substrat. Une telle ceinture de capteurs est d'une structure complexe basée sur les technologies de la microélectronique. Elle doit donc être fabriquée en salle blanche et présente un prix de revient élevé. Le remplacement sur site d'un capteur défectueux n'est pas envisageable et la ceinture doit être retournée en salle blanche pour réparation. De plus, la ceinture doit être recouverte d'un carénage dont la structure est décrite par la demande US 2006/0202086. Ce carénage permet de créer des "chambres de tranquillité" qui ne permettent que la mesure de pression stationnaire et non de pressions générées par des turbulences ou des vibrations. Un tel carénage augmente de façon sensible l'épaisseur de la ceinture ce qui limite son utilisation à de gros avions pour rester dans la couche limite.

Il existe donc un besoin pour un dispositif de mesure de grandeurs pariétales qui soit simple à réaliser et d'un prix de revient réduit, et qui permette de connecter plusieurs capteurs d'une manière simple et pratique, qui ne découple pas les capteurs relativement à une surface d'accueil, et qui soit susceptible de diverses applications.

A cet effet, la présente invention propose un procédé de fabrication d'un dispositif de mesure prenant la forme d'un "tapis" souple en matériau polymère, de faible épaisseur, apte à être fixé sur une surface quelconque, dans lequel sont prévues des cavités aptes à recevoir des capteurs ainsi que des conducteurs électriques débouchant dans les cavités.

La présente invention prévoit plus particulièrement un procédé de fabrication d'un dispositif de mesure selon la revendcation 1.

Ces caractéristiques seront mieux comprises à la lumière de la description suivante de modes de réalisation du procédé de fabrication de dispositifs de mesure selon l'invention, faite à titre non limitatif en référence aux figures jointes parmi lesquelles :
- la figure 1 est une vue de dessus d'un mode de réalisation d'un dispositif de mesure réalisé selon le procédé de l'invention et montre un premier exemple de réalisation de cavités de réception de capteur,
- la figure 2 est une vue profil arrière du dispositif de la figure 1,
- la figure 3 est une vue de dessus du dispositif de la figure 1, après montage de capteurs dans les cavités,
- la figure 4 est une vue de dessus d'un deuxième exemple de réalisation d'une cavité de réception de capteur,
- la figure 5 est une vue de dessus de la cavité de la figure 4 après montage d'un capteur dans la cavité,
- la figure 6 est une vue de dessus d'un troisième exemple de réalisation d'une cavité de réception de capteur,
- la figure 7 est une vue de dessus d'un quatrième exemple de réalisation d'une cavité de réception de capteur,
- la figure 8 est une vue de dessus d'un cinquième exemple de réalisation d'une cavité de réception de capteur,
- les figures 9A à 9N illustrent des étapes d'un procédé de fabrication d'un dispositif de mesure selon l'invention, et
- les figures 10, 11 sont des vues schématiques en coupe de modes de réalisation du dispositif de mesure réalisés selon le procédé de l'invention.

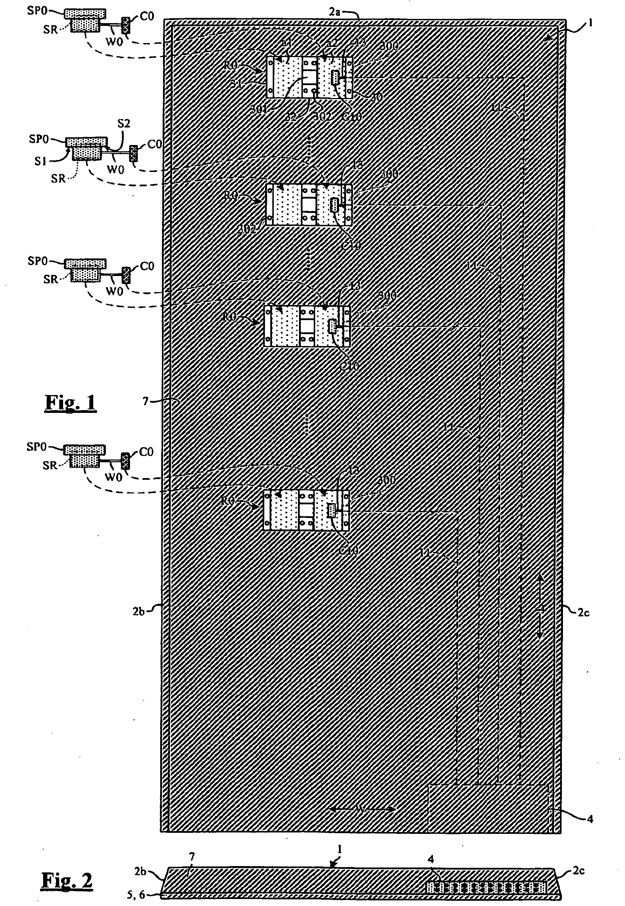

La figure 1 est une vue de dessus d'un exemple de réalisation d'un dispositif de mesure réalisé selon le procédé de l'invention et la figure 2 une vue de profil arrière du dispositif. Le dispositif comprend une plaque polymère 1 souple et déformable, des cavités R0 pratiquées dans la plaque polymère 1, des capteurs SR agencés dans les cavités R0, et des conducteurs électriques 11, 13 noyés dans la plaque polymère 1. Chaque cavité R0 comporte une fenêtre d'accès débouchant sur la face supérieure de la plaque 1, permettant l'introduction d'un capteur SR dans la cavité. Les conducteurs électriques 11, 13 sont agencés de manière à relier les capteurs SR à un point d'entrée/sortie électrique 4 du dispositif.

Selon un aspect de l'invention, les capteurs SR ne sont pas montés nus dans les cavités mais sont préalablement conditionnés dans des enveloppes SP0 dont la forme est prévue pour s'ajuster à la forme des cavités R0 ou réciproquement. Chaque enveloppe SP0 est pourvue d'un moyen de connexion du capteur SR qu'elle contient. Ce moyen de connexion comprend, dans l'exemple de réalisation représenté, des fils électriques W0, par exemple quatre fils dont deux fils d'alimentation électrique et deux fils pour véhiculer un signal émis par le capteur. Dans l'exemple représenté, un connecteur C0 est en outre agencé à l'extrémité de ces fils.

La plaque polymère 1 présente une largeur W de quelques centimètres à plusieurs mètres, une longueur L de quelques dizaines de centimètres à plusieurs mètres, et une très faible épaisseur relativement à sa surface, typiquement de 0,5 à 2 mm et généralement inférieure au centimètre. La plaque polymère 1 peut être collée sur tout type de surface où des mesures de grandeurs pariétales doivent être réalisées. Sa souplesse lui permet d'épouser toute forme de surface, convexe, concave, ondulée, etc.

La plaque polymère 1 comprend une ou plusieurs couches d'un matériau polymère 7 déposées sur une base 5, 6. Ces couches de matériau polymère peuvent être de compositions différentes. Par exemple, la face supérieure de la plaque peut être en un matériau polymère résistant aux hydrocarbures, tandis que le coeur de la plaque polymère 1 peut être en un matériau polymère non résistant aux hydrocarbures. Elle présente de préférence des bords inclinés 2a, 2b, 2c, au moins à l'avant et sur ses côtés, pour des raisons aérodynamiques. Le bord arrière de la plaque 1 présente ici un profil droit.

La partie arrière de la plaque polymère 1 reçoit ici un connecteur 4 formant le point d'entrée/sortie électrique du dispositif. Le connecteur 4 est noyé dans le matériau polymère 7 à l'exception d'une face de connexion qui débouche sur le bord arrière de la plaque (Fig. 2) et permet de connecter le dispositif de mesure à un système de collecte et de traitement de données déporté (non représenté).

Les conducteurs électriques noyés dans la plaque polymère 1 comprennent des faisceaux de fils électriques 13 qui débouchent dans les cavités R0, et des liaisons électriques 11, représentées schématiquement en traits pointillés, qui relient les fils électriques 13 au connecteur 4.

Les fils électriques W0 de chaque enveloppe SP0 de capteur ont ici des terminaisons équipées d'un connecteur C0. De même, les terminaisons des faisceaux de fils électriques 13 sont équipées d'un connecteur C10 prévu pour s'accoupler avec un connecteur C0.

Chaque cavité R0 comporte ici deux logements a1, a2. Le logement a1 est prévu pour recevoir une enveloppe SP0 de capteur. Le logement a2 est prévu pour recevoir les fils W0 du capteur et le connecteur C0 correspondant, ainsi que des terminaisons de faisceaux de fils électriques 13 et le connecteur C10 correspondant. Les logements a1, a2 sont accessibles par l'intermédiaire de la fenêtre de la cavité, qui permet d'y introduire l'enveloppe SP0, les fils W0 et le connecteur C0.

Chaque cavité R0 comporte également une armature permettant le montage de l'enveloppe SP0 de capteur dans le logement a1 et le montage d'un couvercle dans le logement a2. Dans cet exemple de réalisation, l'armature est réalisée d'une manière simple ne nécessitant pas la réalisation d'un berceau, et est constituée d'un flasque proximal 30, d'un flasque distal 31 et d'un flasque séparateur 32 délimitant les logements a1, a2, les autres parois de la cavité étant formées par le matériau polymère 7. Le flasque proximal 30 comprend une gorge 300 permettant à la terminaison d'un faisceau de fils 13 de pénétrer dans le logement a2, et le flasque séparateur 32 comporte une gorge 301 permettant aux fils W0 du capteur de pénétrer dans le logement a2. En supposant que la plaque polymère 1 telle que représentée sur la figure 1 est posée sur une surface horizontale, chaque flasque 30, 31, 32 présente une face d'appui horizontale qui est sensiblement en retrait (en contrebas) relativement au plan de la face supérieure de la plaque polymère 1.

Les enveloppes SP0 de capteurs ont ici un profil sensiblement en forme de "T" et sont conçues pour présenter un premier bord S1 venant en appui sur le flasque distal 31 et un second bord S2 venant en appui sur le flasque séparateur 32. Après montage d'une enveloppe SP0 de capteur dans un logement a1, le connecteur C0 est accouplé au connecteur C10, les deux connecteurs sont disposés dans le logement a2 et celui-ci est fermé au moyen d'un couvercle L0.

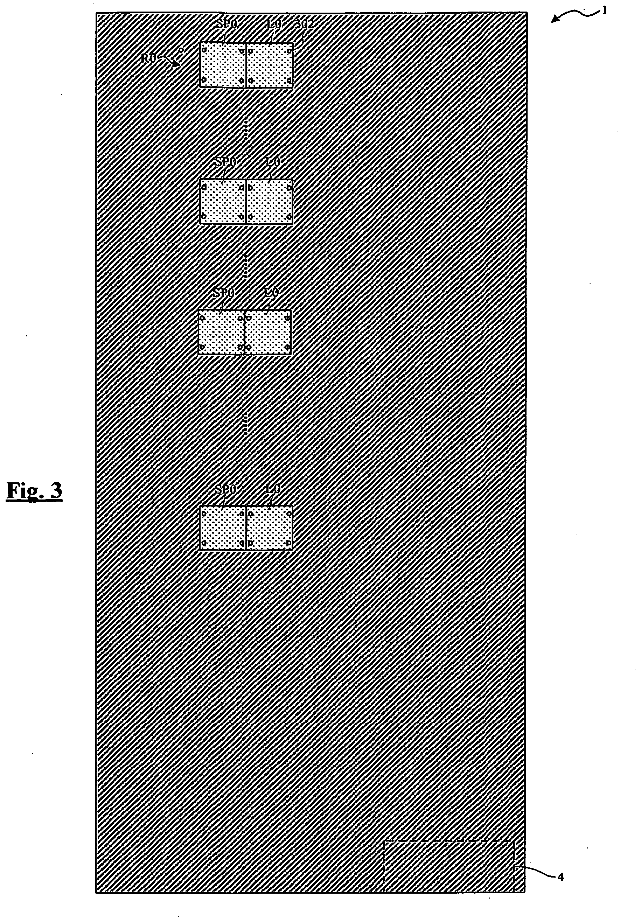

La figure 3 est une vue de dessus de la plaque polymère 1 après montage des enveloppes SP0 et des couvercles L0 dans les cavités R0. Les enveloppes SP0 et les couvercles L0 sont conçus pour que leurs faces supérieures affleurent la face supérieure de la plaque polymère 1 afin de ne pas provoquer de turbulence en présence d'un flux d'air circulant le long de la plaque polymère. La fixation des enveloppes SP0 et des couvercles L0 est faite par collage ou par vis. Pour un montage par vis, des orifices taraudés 302 sont prévus dans les flasques 30, 31, 32 (Fig. 1).

Le capteur SR agencé dans chaque enveloppe SP0 est un minicapteur de très faible encombrement, par exemple de type MEMS (Système MicroElectroMécanique). Il peut être équipé d'un circuit de mesure intégré ou devoir être associé à un circuit de mesure agencé dans une enveloppe distincte, comme cela sera vu plus loin.

De façon générale, les enveloppes SP0 sont susceptibles de recevoir divers types de capteurs, notamment de pression, de vibration, de température, de contrainte, d'accélération, d'humidité, etc. Dans le cas d'un capteur de pression, l'enveloppe correspondante est pourvue d'un orifice de prise de pression qui débouche sur sa face supérieure et donc sur la face supérieure de la plaque polymère 1.

Les capteurs SR et leurs enveloppes SP0 peuvent être des produits standards du commerce comme des micro-capteurs encapsulés de la série LLE-2-500, LLE-7DC-500 révision E ou LLE-6DC-500 commercialisée par la société KULITE, ou être réalisés sur cahier des charges, par adaptation de produits standards. Peuvent également être réalisés des capteurs dérivés de la série KULITE LL-072, livrés avec des fils d'entrée/sortie. L'adaptation d'un produit standard pour le rendre compatible avec le dispositif réalisé selon le procédé de l'invention peut concerner les dimensions et les entrées/sorties électriques du dispositif. L'enveloppe peut ne pas comporter de connecteur, par exemple les enveloppes de la série LL-072 comportent des fils électriques. De tels fils peuvent ensuite être connectés par soudure sur un connecteur à plots d'un type décrit plus loin, ou être connectés au moyen de manchons auto-soudeurs. Comme autre exemple, un capteur de contrainte 2 ou 4 fils de la série SG/V de la société HBM peut également être utilisé dans un dispositif de mesure réalisé selon le procédé de l'invention. La partie sensible d'un tel capteur est agencée entre deux couches de polyimide formant l'enveloppe du capteur et est équipée de fils W0 sans connecteur. La connexion des fils W0 au dispositif de mesure est assurée par exemple par soudage sur connecteur à plots d'un type décrit plus loin, ou au moyen de manchons auto-soudeurs.

Dans un exemple de réalisation, les enveloppes SP0 présentent une longueur de 55 mm, une largeur de 12 mm, et une épaisseur de 2 mm et une épaisseur de 1 mm en ce qui concerne leurs bords S1, S2. Les couvercles L0 sont d'une longueur de 15 mm, une largeur de 13 mm et une épaisseur de 1 mm. Les connecteurs C0, C10 sont par exemple des nano-connecteurs de la série OMNETICS NSS de la société OMNETICS CONNECTOR CORPORATION et les fils 13 sont de diamètre standard AWG30.

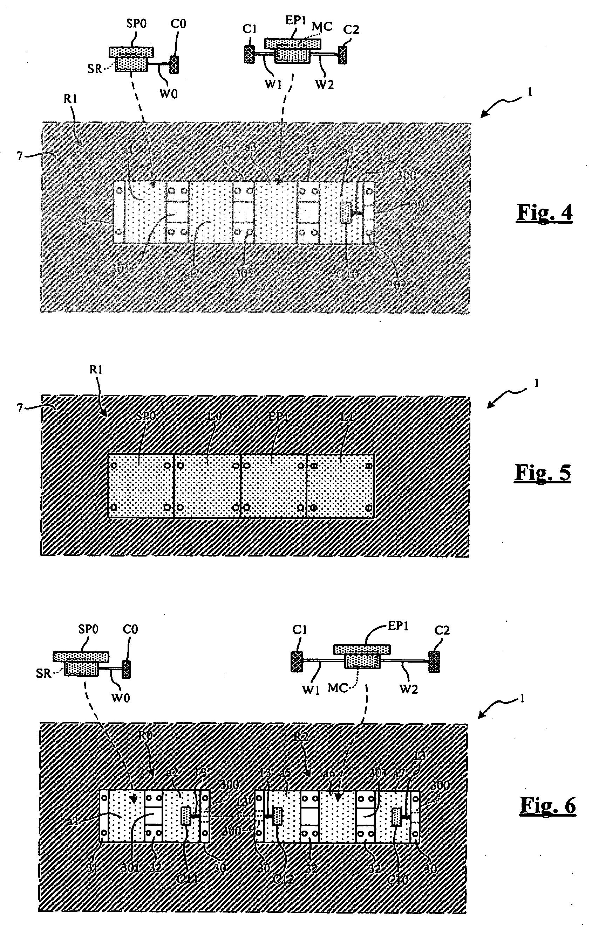

La figure 4 est une vue de dessus d'un deuxième mode de réalisation d'une cavité réalisé selon le procédé de l'invention. La cavité R1 présente comme précédemment une fenêtre qui débouche sur la face supérieure de la plaque polymère 1, et est conformée pour recevoir une enveloppe SP0 de capteur et une enveloppe EP1 contenant un circuit électronique de mesure MC associé au capteur. On entend par "circuit de mesure" tout type de circuit électronique nécessaire au fonctionnement du capteur associé, tel qu'un circuit de compensation, de traitement, de codage et/ou de mise en forme de signaux émis par le capteur, un circuit régulateur de tension ou de courant, etc. Par exemple, des capteurs KULITE de la série LLE-1-125 1100 révision H sont des capteurs de pression comprenant une partie sensible et une partie électronique agencées dans des boitiers séparés.

L'enveloppe SP0 comporte comme précédemment des fils de connexion W0 et un connecteur C0. L'enveloppe EP1 du circuit de mesure, également en forme de "T", comporte des fils W1 reliés à un connecteur C1 destiné à être accouplé avec le connecteur C0 de l'enveloppe SP0, et des fils W2 reliés à un connecteur C2 destiné à être accouplé avec le connecteur C10 d'une terminaison d'un faisceau de fils 13 (Fig. 1).

La cavité R1 comporte quatre logements a1, a2, a3 et a4. L'armature de la cavité R1 comprend un flasque proximal 30 avec sa gorge 300 de passage de fils 13, un flasque distal 31, et trois flasques séparateurs 32 ayant chacun une gorge 301 de passage de fils. Le logement a1 s'étend entre le flasque distal 31 et un premier flasque séparateur 32, et reçoit l'enveloppe SP0. Le logement a2 s'étend entre le premier flasque séparateur 32 et un deuxième flasque séparateur 32, et reçoit les connecteurs C0 et C1. Le logement a3 s'étend entre le deuxième flasque séparateur 32 et un troisième flasque séparateur 32 et reçoit l'enveloppe EP1. Le logement a4 s'étend entre le troisième flasque séparateur 32 et le flasque proximal 30 et reçoit les connecteurs C2 et C10.

Comme représenté sur la figure 5, les logements a1, a3 sont fermés au moyen des enveloppes SP0 et EP1, tandis que les logements a2, a4 sont fermés au moyen de couvercles L0, L1. Les faces supérieures des enveloppes SP0, EP1 et des couvercles L0, L1 s'étendent dans le même plan que la face supérieure de la plaque polymère 1, qui ne présente donc aucun défaut de planéité.

La figure 6 montre un autre mode de réalisation de cavités réalisées selon le procédé de l'invention, permettant de loger dans la plaque polymère 1 une enveloppe SP0 de capteur et une enveloppe EP1 de circuit électronique de mesure MC associé au capteur. La cavité R1 précédemment décrite est ici scindée en deux cavités R0, R2. La cavité R0 est identique à celle précédemment décrite en relation avec la figure 1 et comporte le logement a1 recevant l'enveloppe SP0 et le logement a2 recevant le connecteur C0. Le logement a2 reçoit également un connecteur C11 relié à une terminaison d'un faisceau de fils électriques 13'.

La cavité R2 est prévue pour recevoir l'enveloppe EP1 du circuit de mesure MC et comporte des logements a5, a6 et a7. Le logement a5 s'étend entre un premier flasque proximal 30 et un flasque séparateur 32. Il reçoit le connecteur C1 du circuit de mesure et un connecteur C12 relié à l'autre terminaison du faisceau de fils électriques 13'. Ce faisceau de fils 13' s'étend à l'intérieur de la plaque polymère 1 et débouche dans le logement a2 de la cavité R0, où il est relié au connecteur C11. Le logement a6 s'étend entre le premier flasque séparateur 32 et un second flasque séparateur 32 et reçoit l'enveloppe EP1 du circuit de mesure. Le logement a7 s'étend entre le second flasque séparateur 32 et un second flasque proximal 30, et reçoit une terminaison de faisceau de fils 13, le connecteur C10 correspondant et le connecteur C2 de l'enveloppe EP1.

Lors de l'assemblage du dispositif, l'enveloppe SP0 est agencée dans le logement a1 de la cavité R0, le connecteur C0 est accouplé au connecteur C11 dans le logement a2 de la cavité R0, puis le logement a2 est fermé au moyen d'un couvercle. L'enveloppe EP1 est ensuite agencée dans le logement a6 de la cavité R2, le connecteur C1 est accouplé au connecteur C12 dans le logement a5, le connecteur C2 est accouplé au connecteur C10 dans le logement a7, puis les logements a5, a7 sont fermés au moyen de couvercles. Le capteur SR présent dans l'enveloppe SP0 se trouve donc relié au circuit de mesure MC par l'intermédiaire des fils 13', qui passent à l'intérieur de la plaque polymère 1. Dans certains modes de réalisation, ces fils 13' peuvent être d'une grande longueur, jusqu'à plusieurs mètres. Dans d'autres modes de réalisation, le circuit de mesure MC peut être connecté à plusieurs capteurs SR agencés dans une ou plusieurs cavités R0.

Une cavité de réception d'une enveloppe de capteur et/ou de réception d'une enveloppe de circuit de mesure réalisée selon le procédé de l'invention est susceptible de diverses autres variantes de réalisation.

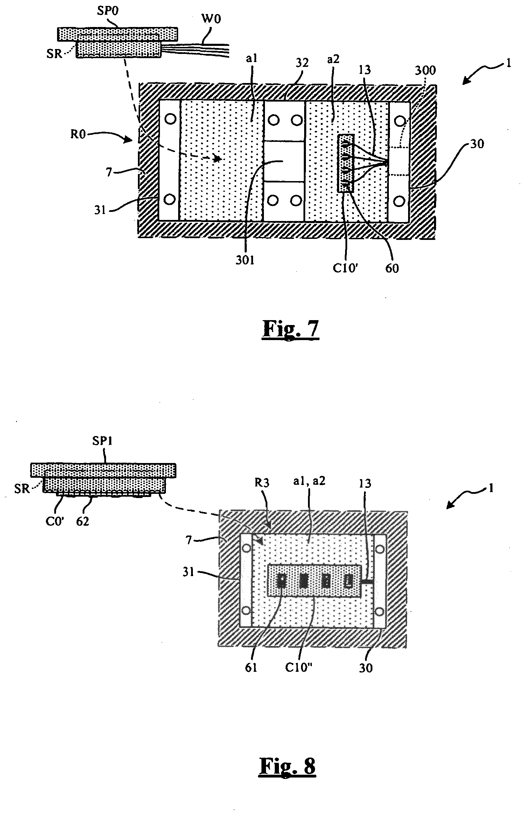

A titre d'exemple, la figure 7 représente la cavité R0 déjà décrite dans laquelle le logement a2, au lieu de recevoir les connecteurs C0, C10, est équipé d'un connecteur C10' à plots métalliques 60 sur lesquels les terminaisons d'un faisceau de fils 13 sont soudées. Dans ce cas, l'enveloppe SP0 de capteur est dépourvue de connecteur C0. Les fils W0 de l'enveloppe SP0 sont directement soudés sur les plots 60 du connecteur C10' pour être reliés électriquement aux fils 13. Dans une variante, le logement a2 ne comporte aucun connecteur et la liaison électrique entre les fils W0 et 13 est assurée au moyen de manchons auto-soudeurs.

Comme autre exemple de mode de réalisation, la figure 8 montre une cavité R3 qui comprend deux logements a1, a2 superposés verticalement, et qui est délimitée par un flasque proximal 30 et un flasque distal 31. Le logement a2 s'étend sous le logement a1 sans séparation matérielle et reçoit un connecteur plat C10" pourvu de plages de contact 61 et relié à une terminaison d'un faisceau de fils 13. L'enveloppe SP1 de capteur agencée dans la cavité R3 comporte sur sa face inférieure un connecteur plat C0' équipé de plages de contact 62. Lorsque l'enveloppe SP1 est insérée dans la cavité R3, les plages de contact 62 viennent au contact des plages de contacts 61. L'enveloppe SP1 peut comme précédemment être fixée par vissage ou collage. Dans le second cas, une colle conductrice anisotrope peut être déposée entre les connecteurs C0' et C10" pour assurer une bonne continuité électrique entre les plages de contact 61 et 62.

Il apparaîtra clairement à l'homme de l'art que le procédé selon la présente invention est susceptible de divers autres modes de réalisation. En particulier, des cavités selon les divers types R0, R1, R2, R3 précédemment décrits peuvent être prévues dans un même dispositif de mesure réalisé selon le procédé de l'invention, en fonction des capteurs utilisés, de leur mode de connexion électrique, de la nécessité ou non de prévoir des circuits de mesure MC dans des enveloppes séparées.

Dans certains modes de réalisation, les cavités peuvent recevoir des capteurs conditionnés dans des enveloppes dont la forme ne correspond pas à celle des logements a1. Les enveloppes sont dans ce cas placées au fond des logements a1 et ces derniers sont fermés au moyen de couvercles, à l'instar des logements a2. Alternativement, un couvercle commun aux logements a1, a2 peut dans ce cas être prévu pour refermer la cavité.

Dans encore d'autres modes de réalisation, plusieurs capteurs peuvent être agencés dans la même cavité, par exemple des jauges de contrainte. Par ailleurs, plusieurs connecteurs d'entrée/sortie 4 peuvent être prévus, si le dispositif comporte un grand nombre de capteurs. Enfin, les couvercles agencés sur les cavités peuvent être en un matériau souple. Ils ne sont pas nécessairement plats, et peuvent être d'une forme convexe ou concave prévue pour épouser la forme de la plaque polymère 1 une fois celle-ci montée sur une surface non plane.

Dans le cadre de la fabrication en série d'un dispositif de mesure selon le procédé de l'invention, il peut être souhaité de réaliser à moindre coût les liaisons électriques 11 (Fig. 1) reliant les fils 13 débouchant dans les cavités R0, R1, R2, R3 et le connecteur d'entrée/sortie 4. Ces liaisons électriques peuvent être d'une grande longueur et il peut être souhaité de les réaliser de manière simple et peu coûteuse. Par ailleurs, il peut être souhaité que les liaisons électriques 11 et les fils 13 soient protégés contre les interférences électromagnétiques (IEM) au moyen d'un blindage, notamment si les capteurs et les circuits de mesures utilisés sont de type analogique et émettent des signaux qui ne sont pas numérisés et sont donc sensibles au bruit électromagnétique.

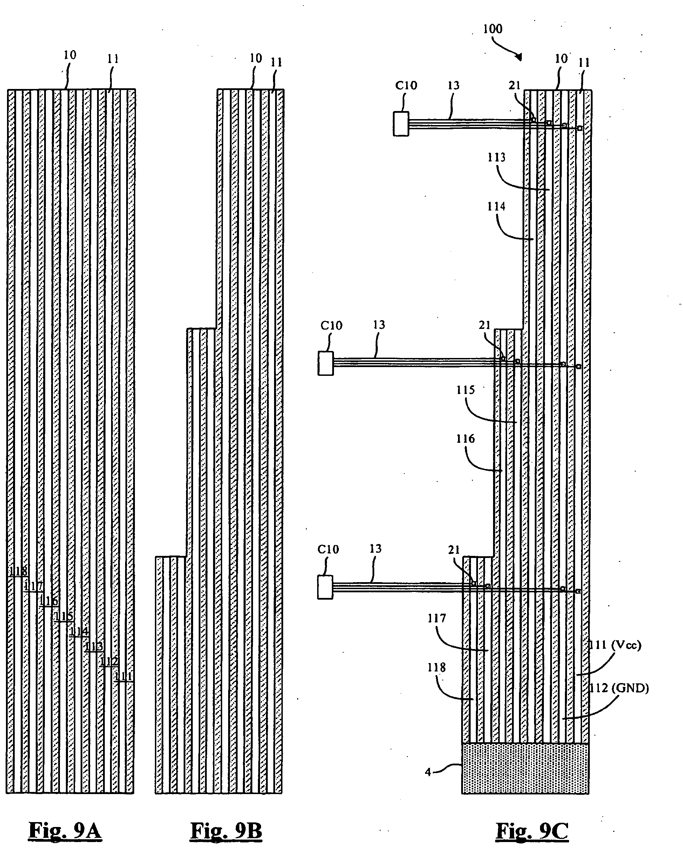

On décrira en relation avec les figures 9A à 9N un mode de réalisation du procédé de fabrication d'un dispositif de mesure selon l'invention qui répond à ces objectifs.

Selon ce mode de réalisation, les liaisons électriques 11 sont réalisées à partir d'une bande de conducteurs parallèles 11 sur substrat polymère, vendue en rouleau et d'un prix de revient avantageux. Il s'agit par exemple d'un circuit d'interconnexion double face polyimide cuivre UPISEL® N BE 1220 d'une épaisseur de l'ordre de 86 micromètres.

Au cours d'une étape représentée sur la Fig. 9A, un circuit polyimide/cuivre 10 en forme de bande est déroulé et est coupé à la longueur souhaitée. Dans l'exemple simplifié représenté, le circuit 10 comporte sur une face huit pistes cuivre 11 désignées 111 à 118 et sur son autre face un plan de masse en cuivre 12. Les pistes 111, 112 sont réservées au transport d'une tension d'alimentation Vcc et d'un potentiel de masse GND aux capteurs et aux circuits de mesure. Les pistes 113, 114 sont réservées au transport de signaux électriques émis par un premier capteur ou son circuit de mesure, s'il est agencé dans une enveloppe séparée. Les pistes 115, 116 sont réservées au transport de signaux électriques émis par un second capteur ou son circuit de mesure, et les pistes 117, 118 sont réservées au transport de signaux électriques émis par un troisième capteur ou son circuit de mesure. Comme illustré sur la figure 9B, les pistes peuvent être coupées à la longueur désirée en fonction des emplacements où les capteurs ou leurs circuits de mesure doivent être agencés. Les pistes 111, 112, qui sont destinées à alimenter électriquement tous les capteurs et/ou leurs circuits de mesure, ont une longueur égale à la plus grande longueur des pistes 113 à 118, ici les pistes 113, 114.

Au cours d'une étape représentée sur la figure 9C, un premier faisceau de fils électriques 13 est connecté aux pistes 111, 112, 113, 114, un second faisceau de fils électriques 13 est connecté aux pistes 111, 112, 115, 116, et un troisième faisceau de fils électriques 13 est connecté aux pistes 111, 112, 117, 118. Les connexions 21 entre les fils 13 et les pistes 11 sont par exemple réalisées avec de la soudure. Chaque faisceau de fils 13 est agencé transversalement à l'axe longitudinal des pistes 11, et est équipé ici, à son autre extrémité, d'un connecteur C10.

Il sera noté que dans le cadre de la réalisation d'un dispositif de grande largeur, des bandes polyimide/cuivre du même type que le circuit 10, équipées des pistes conductrices parallèles, peuvent être agencées transversalement afin de raccourcir la longueur des fils 13, ceux-ci étant alors soudés aux extrémités des pistes conductrices transversales. La connexion entre les pistes conductrices transversales et les pistes conductrices longitudinales du circuit 10 peut être faite par tout moyen approprié, notamment avec des sections de fils électriques de faible longueur.

Toujours au cours de l'étape représentée sur la figure 9C, le connecteur 4 est soudé à une extrémité du circuit 10. Le connecteur 4 est par exemple un connecteur OMNETICS NSS de type CMS (i.e. à montage de surface). Le connecteur peut être revêtu d'un blindage IEM avant d'être monté sur le circuit 10, par exemple en l'entourant d'une bande de cuivre qui est ensuite recouverte d'une couche isolante pour ne pas provoquer de court-circuit entre les pistes conductrices 11.

Au terme de ces étapes, on obtient un bloc d'interconnexion 100 tel que représenté sur la figure 9C, comprenant le circuit 10 agencé longitudinalement, le connecteur 4, les faisceaux de fils 13 agencés transversalement, et les connecteurs C10.

Dans d'autres modes de réalisation, le connecteur 4 pourrait être remplacé par un autre moyen d'entrée/sortie électrique, par exemple une nappe de fils soudée au circuit 10 et s'étendant au-delà de la plaque polymère.

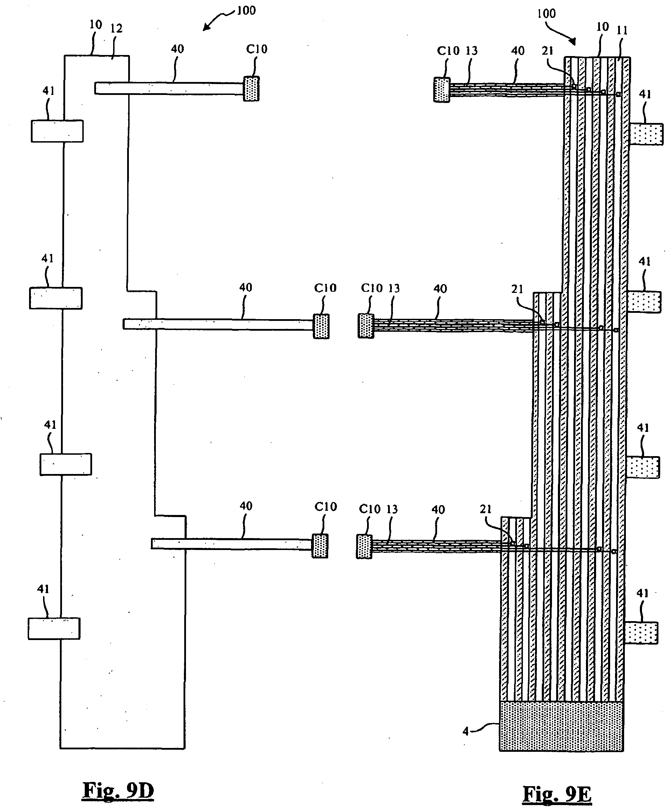

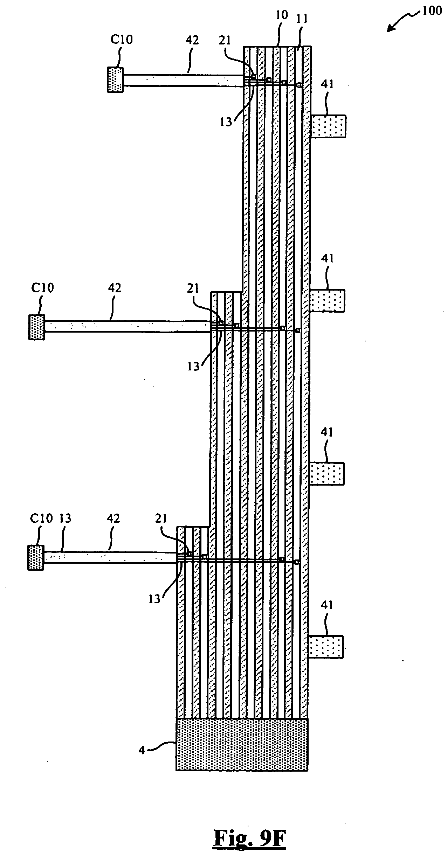

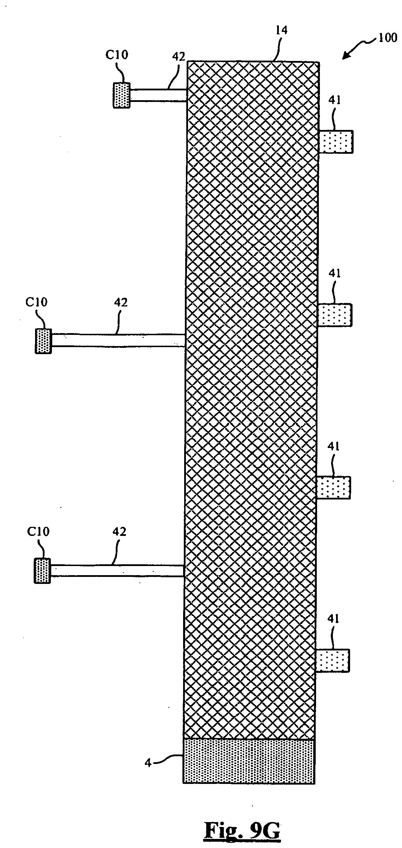

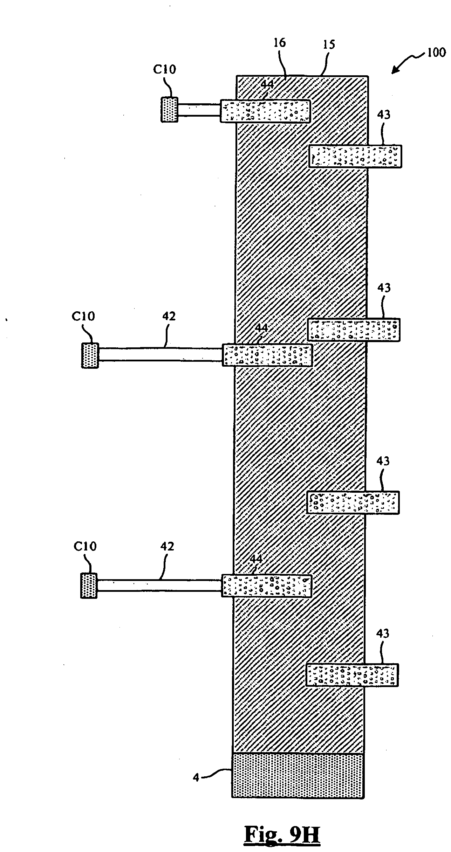

Au cours d'étapes représentées sur les figures 9D, 9E, 9F, 9G, 9H, le bloc d'interconnexion 100 est revêtu d'un blindage IEM sur ses deux faces. Les fils 13 sont tout d'abord revêtus d'un blindage qui est réalisé ici au moyen de bandes de cuivre 40, 42 placées respectivement au-dessous (Fig. 9D, 9E) et au-dessus (Fig. 9F) des fils 13. Les bandes de cuivre sont par exemple obtenues par découpe d'un rouleau de cuivre adhésif 3M® Réf. 1182 d'une épaisseur de l'ordre de 50 microns, revêtu d'une couche adhésive électriquement conductrice. La figure 9D représente la face arrière du circuit 10, qui comprend le plan de masse 12 en cuivre mentionné plus haut. Des bandes de cuivres 41 sont également placées sur le plan de masse 12, pour former des languettes de connexion avec un blindage supérieur décrit ci-après.

La face supérieure du bloc d'interconnexion 100 est ensuite recouverte d'un film adhésif double face 14 (Fig. 9G) puis d'une feuille polyimide/cuivre simple face, par exemple de référence UPISEL® N SE 1220, d'une épaisseur de l'ordre de 68 micromètres, comprenant un substrat polyimide 15 recouvert d'un plan de masse 16 en cuivre (Fig. 9H). D'autres bandes de cuivre sont ensuite ajoutées afin d'assurer la continuité entre le plan de masse inférieur et le plan de masse supérieur. Par exemple, des bandes de cuivre 43 sont collées à cheval sur le plan de masse supérieur 16 et sur les bandes 41, qui sont au contact du plan de masse inférieur 12 (Fig. 9D), et des bandes de cuivre 44 sont collées à cheval sur le plan de masse 16 et les bandes 42 qui recouvrent les fils 13.

L'homme de l'art notera que les figures 9D à 9H ne représentent que schématiquement l'implantation des éléments de blindage, dans un souci de simplicité des dessins. L'homme de l'art prendra soin d'assurer une continuité électrique entre les divers éléments du blindage, en prévoyant un agencement et des superpositions appropriés des éléments de blindage.

Au terme de ces étapes, est ainsi réalisé un bloc d'interconnexion 100 blindé sur ses deux faces, comprenant les pistes conductrices 11 sur substrat polyimide 10, le connecteur 4, les fils 13 et leurs connecteurs C10.

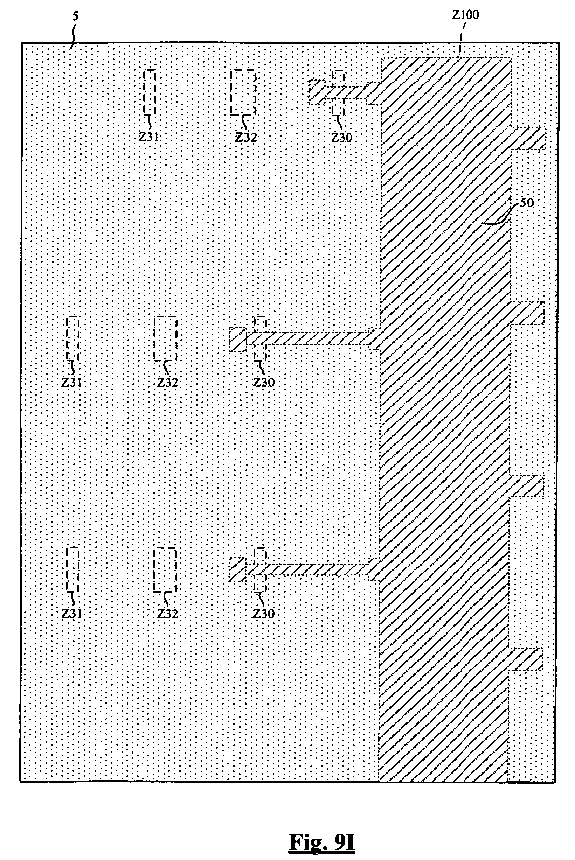

Au cours d'une étape représentée sur la figure 9I, une plaque support 5 en matériau polymère, par exemple une plaque de Kapton® de référence MICEL 200VN, d'une épaisseur de l'ordre de 50 micromètres, est découpée aux dimensions requises. Une zone Z100 d'implantation du bloc d'interconnexion 100 est dessinée sur la plaque 5, ainsi que des zones d'implantation Z30, Z31, Z32 de flasques proximaux 30, de flasques distaux 31 et de flasques de séparation 32 du type décrit plus haut. La zone Z100 est recouverte d'une couche de colle 50 (zone hachurée), par exemple une colle acrylique, ou d'un film adhésif double face.

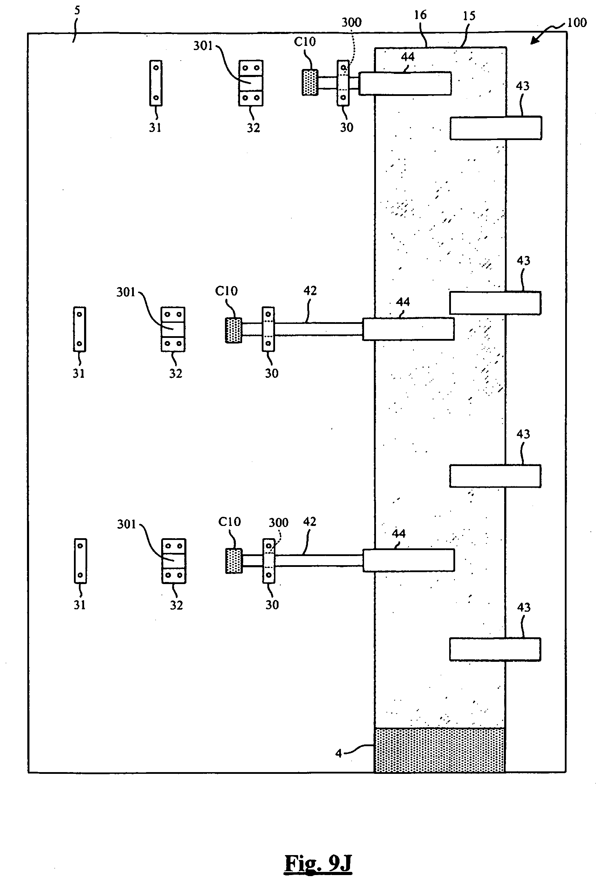

Au cours d'une étape représentée sur la figure 9J, le bloc d'interconnexion 100 est collé sur la plaque 5, par l'intermédiaire de la couche de colle 50. Les flasques 30, 31, 32 sont ensuite collés sur la plaque 5, après avoir été préalablement enduits de colle 50 sur leur face arrière. Les flasques sont ici des plots rigides, semi-rigides ou souples de forme parallélépipédique, par exemple en acier inoxydable. Les plots destinés à former l'armature d'une même cavité sont agencés parallèlement. La gorge 300 des flasques 30 est pratiquée sur la face inférieure de ceux-ci, de sorte que lorsque ceux-ci sont collés sur la plaque 5, la gorge 300 s'étend au-dessus d'un faisceau de fils 13. La gorge 301 des flasques 32 est réalisée sur la face supérieure de ceux-ci.

Au cours de ces étapes, des éléments de blindage non représentés sur les figures peuvent être prévus entre les flasques 30, 31, 32 voire sous les flasques si ceux-ci sont en matériau non conducteur, ainsi que des éléments de continuité électrique entre ces éléments de blindage et ceux de bloc d'interconnexion.

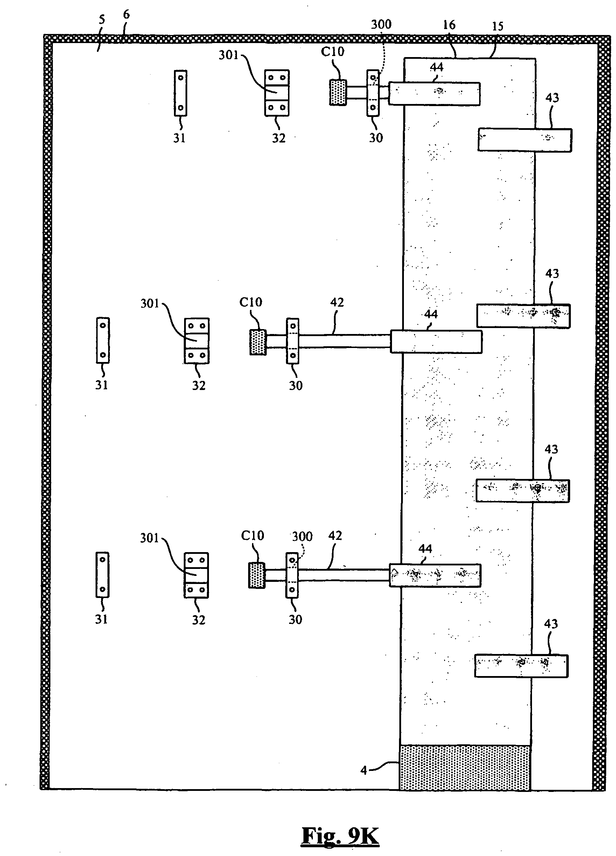

Au cours d'une étape représentée sur la figure 9K, la plaque support 5 est placée sur une feuille adhésive double face 6 dont la surface est sensiblement supérieure à celle de la plaque 5. La feuille 6 est par exemple une feuille 3M® Réf. 9460 d'une épaisseur de l'ordre de 50 micromètres ou 3M® 9469 d'une épaisseur de l'ordre de 130 micromètres.

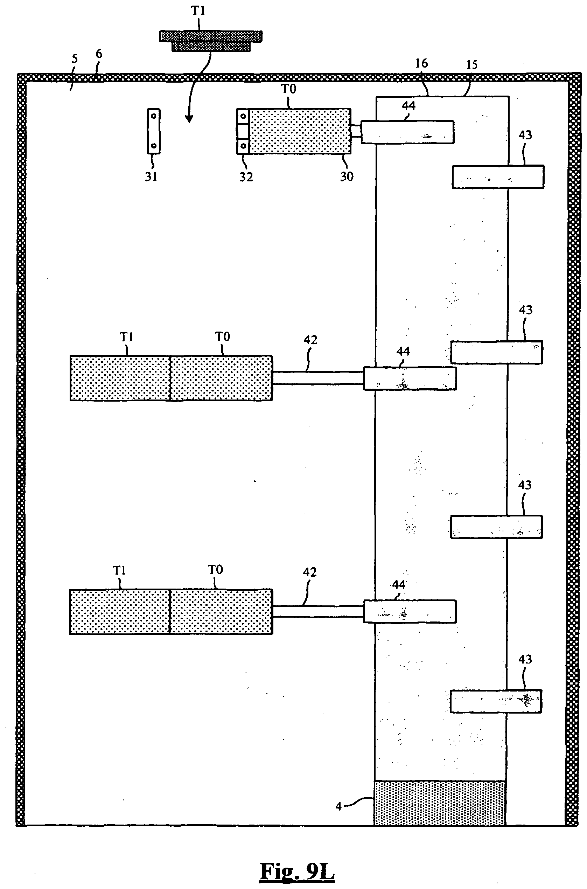

Au cours d'une étape représentée sur la figure 9L, des pièces de protection T0, T1 appelées "bouchons", par exemple en Téflon®, sont agencées sur les flasques 30, 31, 32. Ces bouchons sont en forme de "T" et s'appuient sur les flasques 30,31, 32. Leur forme correspond à la forme que l'on souhaite conférer aux logements a1, a2 décrits plus haut.

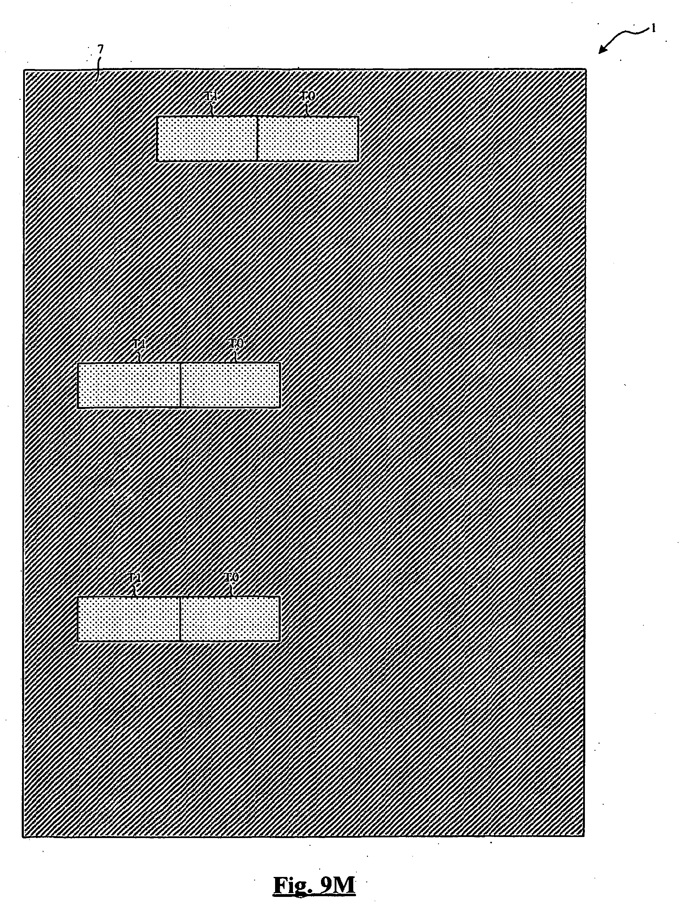

Au cours d'une étape représentée sur la figure 9M, la plaque support 5 est recouverte du matériau polymère 7 à l'exception des régions où se trouvent les bouchons T0, T1, ces derniers empêchant le matériau polymère de se répandre sur la plaque 5. Le matériau polymère 7 est déposé en une ou plusieurs couches. Le matériau polymère 7 est par exemple du polymère silicone auto nivelant RHODIA® CAF 1. Une couche résistant aux hydrocarbures peut être déposée en dernier lieu, par exemple une émulsion silicone DOW CORNING® DC 730. Les bords inclinés 2a, 2b, 2c montrés sur la figure 1 peuvent être obtenus de diverses manières, par exemple au moyen d'une raclette qui est passée le long des bords avant réticulation du matériau polymère ou par découpe du matériau polymère une fois celui-ci réticulé.

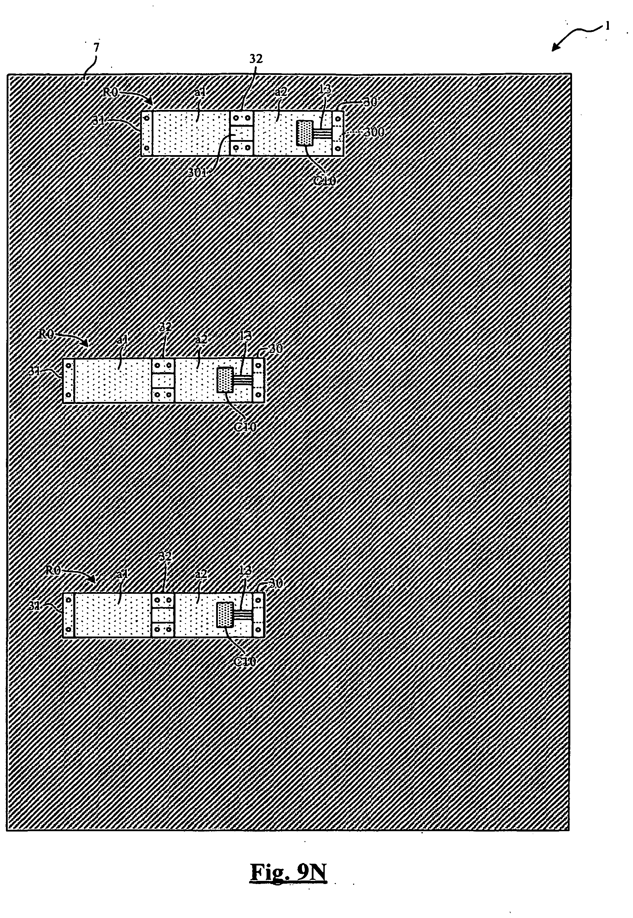

Au cours d'une étape représentée sur la figure 9N, les bouchons T0, T1 sont retirés pour obtenir respectivement les logements a1 et a2 des cavités R0.

Le procédé qui vient d'être décrit permet également de réaliser des cavités R1, R2, R3 précédemment décrites. Ce procédé est susceptible de diverses variantes de réalisation. Par exemple, à l'étape illustrée sur la figure 9J, des plots peuvent être collés sur la plaque 5 de chaque côté du connecteur 4. De tels plots permettent ensuite de visser au dessus du connecteur 4 une plaque de maintien d'un connecteur externe devant être accouplé au connecteur 4, la plaque de maintien s'étendant au-delà de la plaque polymère 1.

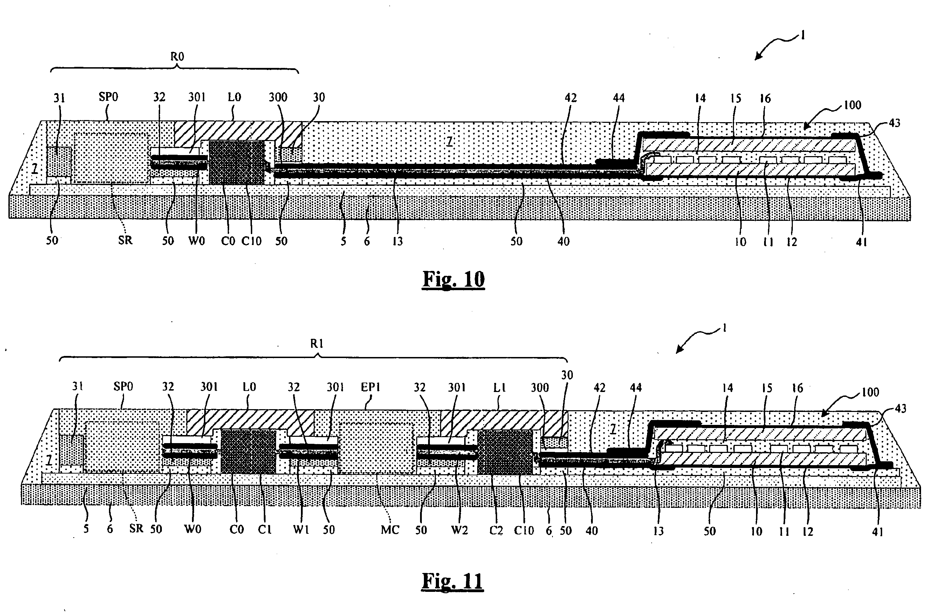

La figure 10 est une vue en coupe schématique de la plaque polymère 1 et d'une cavité R0 réalisée selon le procédé qui vient d'être décrit. La figure 11 est une vue en coupe schématique de la plaque polymère 1 et d'une cavité R1 réalisée selon ce procédé.

On distingue sur chacune des figures le bloc d'interconnexion 100 et les flasques 30, 31, 32 fixés sur la plaque 5 au moyen de la couche de colle 50, l'enveloppe SP0 agencée dans la cavité R0 (Fig. 10) ou les enveloppes SP0 et EP1 agencées dans la cavité R1 (Fig. 11), les couvercles L0 (Fig. 10, 11) et L1 (Fig. 11). Le blindage du bloc d'interconnexion 100 est représenté en traits épais et comprend les plans de masse 12, 16 et les bandes de cuivre 40, 41, 42, 43, 44. Des éléments de blindage peuvent également être agencés autour des fils W0 (Fig. 10, 11) et W1, W2 (Fig. 11).

Comme cela apparaît sur ces vues en coupe, le matériau polymère 7 qui recouvre la plaque support 5 s'étend jusqu'au bord de la feuille adhésive 6. Ainsi, la plaque polymère 1, bien qu'étant montée par collage sur une surface d'accueil au moyen de la feuille 6, présente un bord d'attaque minimisant les perturbations d'écoulement d'air ou de fluide dues à la présence du dispositif. La feuille adhésive 6 peut par ailleurs être remplacée après utilisation. Les enveloppes SP0 de capteurs et les enveloppes EP1 de circuits de mesure peuvent également être retirées et remplacées, qu'elles soient vissées ou collées avec un film adhésif double face (lequel sera alors remplacé par un nouveau film adhésif). Enfin, les cavités peuvent être rendues étanches, notamment dans le cadre de mesures en environnement humide, de mesures hydrodynamiques ou de mesures d'écoulement. Cette étanchéité peut être obtenue de diverses manières, par exemple en montant les enveloppes SP0, EP1 et les couvercles L0, L1 dans les cavités par l'intermédiaire de joints d'étanchéité, et/ou en utilisant un vernis d'étanchéité.

Un dispositif de mesure réalisé selon le procédé de l'invention présente un prix de revient avantageux et est susceptible de diverses applications, en sus des applications classiques dans le domaine de l'aéronautique, notamment dans le domaine de l'automobile (aérodynamique des carrosseries), de la construction ferroviaire (aérodynamique des trains et des tunnels), de la construction navale (hydrodynamique des coques de bateaux), des études acoustiques et de façon générale tous types d'application où des mesures de grandeur pariétales peuvent être utiles, telles que la mesure de pression le long des parois de cheminées d'évacuation d'air, de conduits de circulation d'air ou de gaz, les mesures en soufflerie, etc.

## Revendications

1. Procédé de fabrication d'un dispositif de mesure, **caractérisé en ce qu'**il comprend :
une étape de fabrication d'une plaque polymère (1) souple comprenant :
- au moins une première cavité (R0, R1, R3) pratiquée à l'intérieur de la plaque polymère (1), comportant un fond et une fenêtre d'introduction de capteur débouchant sur une face supérieure de la plaque polymère, et conformée pour recevoir au moins un capteur de grandeur physique (SR) agencé dans une enveloppe (SP0, SP1),
- des conducteurs électriques (11, 13, 13') noyés dans la plaque polymère (1) et comportant une terminaison débouchant dans la cavité (R0, R1, R3), pour relier électriquement le capteur à un point d'entrée/sortie électrique (4) de la plaque polymère (1), et
- une étape d'agencement dans la cavité d'au moins un capteur de grandeur physique agencé dans une enveloppe, et de connexion du capteur à la terminaison de conducteurs électriques qui débouche dans la cavité.

2. Procédé de fabrication selon la revendication 1, dans lequel la cavité (R0, R1, R3) comprend au moins un premier logement (a1) pour recevoir l'enveloppe (SP0, SP1) du capteur (SR) et un second logement (a2, a4) pour recevoir des moyens (W0, C0, C0', C10, C10' C10") de connexion du capteur à la terminaison de conducteurs électriques (13, 13') qui débouche dans la cavité.

3. Procédé de fabrication selon la revendication 2, dans lequel la cavité (R0, R1) comprend un flasque séparateur (32) délimitant les premier et second logements (a1, a2, a4) et offrant une surface d'appui à l'enveloppe (SP0) du capteur pour la fixation de celle-ci dans la cavité.

4. Procédé de fabrication selon l'une des revendications 1 à 3, dans lequel l'étape d'agencement dans la cavité d'au moins un capteur de grandeur physique comprend la conformation de l'enveloppe (SP0, SP1) du capteur de manière à présenter une face supérieure qui s'étend dans le plan de la face supérieure de la plaque polymère (1) lorsque l'enveloppe est agencée dans la cavité.

5. Procédé de fabrication selon l'une des revendications 1 à 4, comprenant l'utilisation d'au moins un couvercle (L0, L1) pour refermer tout ou partie de la cavité (R0, R1), le couvercle étant conformé de manière à présenter une face supérieure qui s'étend dans le plan de la face supérieure de la plaque polymère lorsqu'il est agencé dans la cavité.

6. Procédé de fabrication selon l'une des revendications 1 à 5, dans lequel il est prévu que le point d'entrée/sortie électrique de la plaque polymère comprenne un connecteur (4) présentant une face de connexion qui débouche sur un bord de la plaque polymère.

7. Procédé de fabrication selon l'une des revendications 1 à 6, comprenant :
- une étape consistant à prévoir un circuit électronique de mesure (MC) agencé dans une seconde enveloppe (EP1), et
- et dans lequel l'étape de fabrication de la plaque polymère comprend une étape de formation à l'intérieur de la plaque polymère (1) d'une cavité (R1, R2) comportant une fenêtre débouchant sur une face supérieure de la plaque polymère, pour recevoir la seconde enveloppe.

8. Procédé de fabrication selon la revendication 7, dans lequel l'étape de fabrication de la plaque polymère comprend une étape de formation dans la plaque polymère (1) d'une seconde cavité (R2) pour recevoir l'enveloppe (EP1) du circuit de mesure, et dans lequel les conducteurs électriques de la plaque polymère comprennent des premiers conducteurs (11, 13) pour relier le circuit de mesure au point d'entrée/sortie électrique (4) de la plaque polymère, et des seconds conducteurs (13') pour relier le capteur (SR) présent dans la première cavité (R0) au circuit de mesure (EP1) présent dans la seconde cavité (R2).

9. Procédé de fabrication selon l'une des revendications 1 à 8, comprenant une étape consistant à prévoir, dans les conducteurs électriques de la plaque polymère, une première section conductrice (11) agencée dans le sens de la longueur (L) de la plaque polymère et comprenant des pistes conductrices parallèles (11) agencées sur un substrat polymère (10) en forme de bande.

10. Procédé de fabrication selon l'une des revendications 1 à 9, dans lequel la plaque polymère (1) est réalisée de manière à comprendre :
- une plaque support en un matériau souple (5),
- un substrat polymère (10) agencé sur la plaque support (5) et sur lequel s'étendent des pistes conductrices (11),
- des plots rigides ou semi-rigides (30, 31, 32) agencés sur la plaque support (5), formant des armatures de cavités (R0, R1, R2, R3),
- des fils électriques (13) agencés sur la plaque support, connectés aux pistes conductrices (11),
- au moins un matériau polymère (7) qui recouvre la plaque support (5), le substrat polymère (10) les fils électriques (13) et partiellement les plots (30, 31, 32), dans lequel sont pratiquées des cavités (R0, R1, R2, R3) de réception d'enveloppes (SP0, SP1) de capteurs (SR) et/ou d'enveloppes (EP1) de circuits électroniques de mesure (MC) associés à des capteurs.

## Patentansprüche

1. Verfahren zur Herstellung einer Messvorrichtung, **dadurch gekennzeichnet, dass** es Folgendes umfasst:
einen Schritt zur Herstellung einer flexiblen Polymerplatte (1), umfassend:
- mindestens einen ersten Hohlraum (R0, R1, R3), der im Inneren der Polymerplatte (1) eingearbeitet ist, aufweisend einen Boden und ein Fenster zum Einführen eines Sensors, das an einer Oberfläche der Polymerplatte mündet und ausgebildet ist, um mindestens einen in einer Hülle (SP0, SP1) eingerichteten Sensor einer physikalischen Größe (SR) aufzunehmen,
- in die Polymerplatte (1) eingelassene elektrische Leiter (11, 13, 13'), die ein Endstück aufweisen, das in den Hohlraum (R0, R1, R3) mündet, um den Sensor mit einem elektrischen Eingangs-/Ausgangspunkt (4) der Polymerplatte (1) elektrisch zu verbinden, und
- einen Schritt zur Einrichtung in dem Hohlraum von mindestens einem Sensor einer physikalischen Größe, der in einer Hülle eingerichtet ist, und zum Anschließen des Sensors an das in den Hohlraum mündende Endstück elektrischer Leiter.

2. Herstellungsverfahren nach Anspruch 1, wobei der Hohlraum (R0, R1, R3) mindestens eine erste Lagerung (a1) zur Aufnahme der Hülle (SP0, SP1) des Sensors (SR) und eine zweite Lagerung (a2, a4) zur Aufnahme der Anschlussmittel (W0, C0, C0', C10, C10' C10") des Sensors an das in den Hohlraum mündende Endstück elektrischer Leiter (13, 13') umfasst.

3. Herstellungsverfahren nach Anspruch 2, wobei der Hohlraum (R0, R1) einen Trennflansch (32) umfasst, welcher die erste und zweite Lagerung (a1, a2, a4) begrenzt und der Hülle (SP0) des Sensors eine Stützfläche für deren Befestigung in dem Hohlraum bietet.

4. Herstellungsverfahren nach einem der Ansprüche 1 bis 3, wobei der Schritt zur Einrichtung in dem Hohlraum von mindestens einem Sensor einer physikalischen Größe die Ausgestaltung der Hülle (SP0, SP1) des Sensors derart umfasst, dass sie eine Oberfläche aufweist, die sich in der Ebene der Oberfläche der Polymerplatte (1) erstreckt, wenn die Hülle im Hohlraum eingerichtet ist.

5. Herstellungsverfahren nach einem der Ansprüche 1 bis 4, umfassend die Verwendung von mindestens einem Deckel (L0, L1), um den Hohlraum (R0, R1) ganz oder teilweise zu verschließen, wobei der Deckel derart ausgestaltet ist, dass er eine Oberfläche aufweist, die sich in der Ebene der Oberfläche der Polymerplatte erstreckt, wenn er im Hohlraum eingerichtet ist.

6. Herstellungsverfahren nach einem der Ansprüche 1 bis 5, wobei vorgesehen ist, dass der elektrische Eingangs-/Ausgangspunkt der Polymerplatte einen Verbinder (4) umfasst, der eine an einen Rand der Polymerplatte mündende Anschlussseite aufweist.

7. Herstellungsverfahren nach einem der Ansprüche 1 bis 6, umfassend:
- einen Schritt, der darin besteht, eine elektronische Messschaltung (MC) vorzusehen, die in einer zweiten Hülle (EP1) eingerichtet ist, und
- wobei der Schritt zur Herstellung der Polymerplatte einen Schritt zur Bildung Bildens im Inneren der Polymerplatte (1) eines Hohlraums (R1, R2) umfasst, der ein Fenster aufweist, das an einer Oberfläche der Polymerplatte mündet, um die zweite Hülle aufzunehmen.

8. Herstellungsverfahren nach Anspruch 7, wobei der Schritt zur Herstellung der Polymerplatte einen Schritt zur Bildung in der Polymerplatte (1) eines zweiten Hohlraums (R2) umfasst, um die Hülle (EP1) der Messschaltung aufzunehmen, und wobei die elektrischen Leiter der Polymerplatte erste Leiter (11, 13) umfassen, um die Messschaltung mit dem elektrischen Eingangs-/Ausgangspunkt (4) der Polymerplatte zu verbinden, und zweite Leiter (13'), um den im ersten Hohlraum (R0) vorhandenen Sensor (SR) mit der im zweiten Hohlraum (R2) vorhandenen Messschaltung (EP1) zu verbinden.

9. Herstellungsverfahren nach einem der Ansprüche 1 bis 8, umfassend einen Schritt, der darin besteht, in den elektrischen Leitern der Polymerplatte einen ersten Leiterabschnitt (11) vorzusehen, der in der Längsrichtung (L) der Polymerplatte eingerichtet ist und parallele, auf einem bandförmigen Polymersubstrat (10) angeordnete Leiterbahnen (11) umfasst.

10. Herstellungsverfahren nach einem der Ansprüche 1 bis 9, wobei die Polymerplatte (1) derart hergestellt ist, dass sie Folgendes umfasst:
- eine Trägerplatte aus einem flexiblen Material (5),
- ein Polymersubstrat (10), das auf der Trägerplatte (5) eingerichtet ist und auf dem sich Leiterbahnen (11) erstrecken,
- auf der Trägerplatte (5) eingerichtete feste oder halbfeste Stifte (30, 31, 32), die Bewehrungen von Hohlräumen (R0, R1, R2, R3) bilden,
- auf der Trägerplatte eingerichtete elektrische Drähte (13), die an die Leiterbahnen (11) angeschlossen sind,
- mindestens ein Polymermaterial (7), bedeckend die Trägerplatte (5), das Polymersubstrat (10), die elektrischen Drähte (13) und teilweise die Stifte (30, 31, 32), in dem Hohlräume (R0, R1, R2, R3) zur Aufnahme von Hüllen (SP0, SP1) von Sensoren (SR) und/oder von Hüllen (EP1) von elektronischen Messschaltungen (MC), die Sensoren zugeordnet sind, eingearbeitet sind.

## Claims

1. A method for manufacturing a measuring device, **characterized in that** it comprises:
- a step of manufacturing a flexible polymer plate (1) including,
- at least one first cavity (R0, R1, R3) formed within the polymer plate (1), comprising a bottom and a window for introducing a sensor, opening onto an upper face of the polymer plate and configured to receive at least one physical value sensor (SR) arranged in a casing (SP0, SP1), and
- electrical conductors (11, 13, 13') embedded in the polymer plate (1) and comprising a termination extending into the cavity (R0, R1, R3), to electrically couple the sensor to an electrical input/output point (4) of the polymer plate (1);
- a step of arranging in the cavity at least one sensor of a physical value located in a casing, and connecting the sensor to the ends of electrical conductors that arrive in the cavity.

2. The manufacturing method according to claim 1, wherein the cavity (R0, R1, R3) comprises at least a first housing (a1) to receive the casing (SP0, SP1) of the sensor (SR) and a second housing (a2, a4) to receive means (W0, C0, C0', C10, C10' C10") for coupling the sensor to the electrical conductor termination (13, 13') extending in the cavity.

3. The manufacturing method according to claim 2, wherein the cavity (R0, R1) comprises a separating flange (32) delimiting the first and second housings (a1, a2, a4) and providing a bearing surface for the sensor casing (SP0) so that the sensor casing may be fixed in the cavity.

4. The manufacturing method according to one of claims 1 to 3, wherein the step of arranging in the cavity at least one sensor of a physical value includes conforming the casing (SP0, SP1) of the sensor so as to have an upper face extending in the plane of the upper face of the polymer plate (1) when the casing is arranged in the cavity.

5. The manufacturing method according to one of claims 1 to 4, comprising using at least one lid (L0, L1) to close all or part of the cavity (R0, R1), the lid being configured so as to have an upper face extending in the plane of the upper face of the polymer plate when it is arranged in the cavity.

6. The manufacturing method according to one of claims 1 to 5, wherein the electrical input/output point of the polymer plate is provided with a connector (4) having a connection face opening onto an edge of the polymer plate.

7. The manufacturing method according to one of claims 1 to 6, comprising:
- a step of providing an electronic measuring circuit (MC) arranged in a second casing (EP1), and
wherein the step of manufacturing the polymer plate comprises a step of forming inside the polymer plate (1) a cavity (R1, R2) comprising a window opening onto an upper face of the polymer plate, for receiving the second casing.

8. The manufacturing method according to claim 7, wherein the step of manufacturing the polymer plate (1) comprises a step of forming in the polymer plate (1) a second cavity (R2) for receiving the casing (EP1) of the measuring circuit, and in which the electrical conductors of the polymer plate comprise first conductors (11, 13) to couple the measuring circuit to the electrical input/output point (4) of the polymer plate, and second conductors (13') to couple the sensor (SR) present in the first cavity (R0) to the measuring circuit (EP1) present in the second cavity (R2).

9. The manufacturing method according to one of claims 1 to 8, comprising a step of providing, in the electrical conductors of the polymer plate, a first conductive section (11) arranged lengthwise (L) of the polymer plate and comprising parallel conductive tracks (11) arranged on a polymer substrate (10) in strip form.

10. The manufacturing method according to one of claims 1 to 9, wherein the polymer plate (1) is manufactured to include:
- a support plate made of a flexible material (5),
- a polymer substrate (10) arranged on the support plate (5) and on which conductive tracks extend (11),
- rigid or semi-rigid pads (30, 31, 32) arranged on the support plate (5), forming cavity (R0, R1, R2, R3) armatures,
- electric wires (13) arranged on the support plate, coupled to the conductive tracks (11),
- at least one polymer material (7) that covers the support plate (5), the polymer substrate (10), the electric wires (13) and partially the pads (30, 31, 32), in which cavities (R0, R1, R2, R3) are formed to receive casings (SP0, SP1) of sensors (SR) and/or casings (EP1) of electronic measuring circuits (MC) associated with sensors.
